# EUROPÄISCHE PATENTANMELDUNG

(11) **EP 1 026 879 A2**
(43) Veröffentlichungstag der Anmeldung: **09.08.2000**
(21) Anmeldenummer: 00101358.0
(22) Anmeldetag: 24.01.2000
(51) Int. Cl.: H04N 3/15

(54) **Bildauflösende Detektoranordnung**

(30) Priorität: 06.02.1999 DE 19904914
(71) Anmelder: Bodenseewerk Gerätetechnik GmbH, 88662 Überlingen (DE)
(72) Erfinder: Krogmann, Dirk, 88696 Owingen (DE); Tholl, Hans Diether, 88690 Uhldingen (DE)
(74) Vertreter: Weisse, Jürgen, Dipl.-Phys.

(57) **Zusammenfassung**

Auf einer bildauflösende Detektoranordnung ist durch ein abbildendes optisches System (34) ein Bild einer Objektszene erzeugbar. Durch Bildelement-Auswahlmittel wird auf jedes der Detektorelemente (12;62) nacheinander Strahlung von jeweils einem von mehreren benachbarten Bildelementen eines dem Detektorelement (12;62) zugeordneten Bildbereichs geleitet. Dabei sind die Bildelement-Auswahlmittel von einem in einer Bildebene (36) angeordneten, in dieser Bildebene (36) schrittweise beweglichen Mikro-Blendenraster (22;52) gebildet, das in jeder Stellung nur Strahlung von einem Teilbereich jedes einem Detektorelement (12;62) zugeordneten Bildbereichs auf das Detektorelement (12;62) gelangen läßt.

## Beschreibung

Die Erfindung betrifft eine bildauflösende Detektoranordnung, auf welcher durch ein abbildendes optisches System ein Bild einer Objektszene erzeugbar ist, mit einer zweidimensionalen Anordnung von Detektorelementen und Bildelement-Auswahlmitteln, durch welche auf jedes der Detektorelemente nacheinander Strahlung von jeweils einem von mehreren benachbarten Bildelementen eines dem Detektorelement zugeordneten Bildbereichs geleitet wird.

Eine solche Anordnung ist bekannt durch die DE 43 37 047 A1. Diese beschreibt eine passive, bildauflösende Detektoranordnung mit einem Matrixdetektor, auf welchen durch abbildende optische Mittel ein Bild einer Objektszene erzeugt wird und der aus einer zweidimensionalen Anordnung von Detektorelementen besteht. Es ist ein mikromechanisches Spiegelraster mit einer zweidimensionalen Anordnung von Spiegelelementen vorgesehen. Jedes Spiegelelement ist durch binäre Steuersignale in eine erste und eine zweite Schaltstellung schwenkbar. Durch ein erstes abbildendes optisches System wird die Objektszene mit hoher Auflösung auf das mikromechanische Spiegelraster abgebildet. Durch ein zweites optisches System wird das mikromechanische Spiegelraster derart auf den Matrixdetektor abgebildet, daß auf jedes Detektorelement jeweils eine Sub-Matrix des Mikromechanischen Spiegelrasters mit einer Mehrzahl von Spiegelelementen abgebildet wird. Die Spiegelelemente leiten in der ersten Schaltstellung die Abbildungsstrahlen an dem Matrixdetektor vorbei, während sie in der zweiten Schaltstellung die Abbildungsstrahlen auf das jeweils zugeordnete Detektorelement des Matrixdetektors leiten. Das mikromechanische Spiegelraster ist derart ansteuerbar, daß in zyklischer Folge jeweils vorgegebene Spiegelelemente des Sub-Matrizen in der zweiten Schaltstellung sind und die übrigen Spiegelelemente der Sub-Matrix in der ersten Schaltstellung sind.

Auf diese Weise werden nacheinander Bilder von je einem Pixel pro Sub-Matrix durch den Matrixdetektor erzeugt. Diese Bilder können dann "elektronisch" im Speicher ineinandergeschachtelt werden. Es ergibt sich ein elektronisches Bild, dessen Auflösung nicht durch den Matrixdetektor sondern durch das Spiegelraster bestimmt wird.

Durch die EP 0 133 890 B ist ein elektrooptisches Detektorsystem zur Erzeugung elektronischer Bildinformation mit einem ladungsgekoppelten Matrixdetektor bekannt, der aus einer Anordnung von Zeilen und Spalten quadratischer Detektorelemente besteht. Zwischenräume zwischen den Detektorelementen haben eine Breite, die im wesentlichen der Seitenlänge der Detektorelemente entspricht. Durch einen Taumelspiegel, der nacheinander in vier Stellungen fortschaltbar ist und über den der Abbildungsstrahlengang geleitet wird, wird ein Bild der Objektszene schrittweise relativ zu dem Matrixdetetektor in die Echen eines Quadrats bewegt. Dadurch erfaßt jedes Detektorelement zyklisch nacheinander vier aneinandergrenzende Bereiche des Bildes der Objektszene. Die Bildinformationen werden dann in einem Rechner zu einem durchgehenden "Bild" zusammengesetzt.

Der Erfindung liegt die Aufgabe zu Grunde, die Auflösung einer bildauflösenden Detektoranordnung mit einfachen Mitteln zu verbessern.

Erfindungsgemäß wird diese Aufgabe dadurch gelöst, daß die Bildelement-Auswahlmittel von einem in einer Bildebene angeordneten, in dieser Bildebene schrittweise beweglichen Mikro-Blendenraster gebildet sind, das in jeder Stellung nur Strahlung von einem Teilbereich jedes einem Detektorelement zugeordneten Bildbereichs auf das Detektorelement gelangen läßt.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.
- Fig.1: ist eine schematisch-perspektivische Darstellung einer ersten Ausführung der Erfindung.
- Fig.2: zeigt den Strahlengang einer bildauflösenden Detektoranordnung, bei welcher mitttels eines mikrooptischen Stahlenablenk-Elements einerseits unterschiedliche Bereiche eines Blickfeldes nacheinander auf einer zweidimensionalen Detektoranordnung abbildbar sind und andererseits eine Verbesserung der Auflösung ähnlich wie bei der Anordnung von Fig.1 erfolgt.
- Fig.3: ist eine schematisch-perspektivische Darstellung und veranschaulicht den Aufbau der optischen Systeme zur Erfassung verschiedener Blickfeld-Abschnitte bei der bildauflösenden Detektoranordnung von Fig.2.
- Fig.4: ist eine schematisch-perspektivische Darstellung und veranschaulicht die Wirkungsweise des Strahlenablenk-Elements in Fig.2

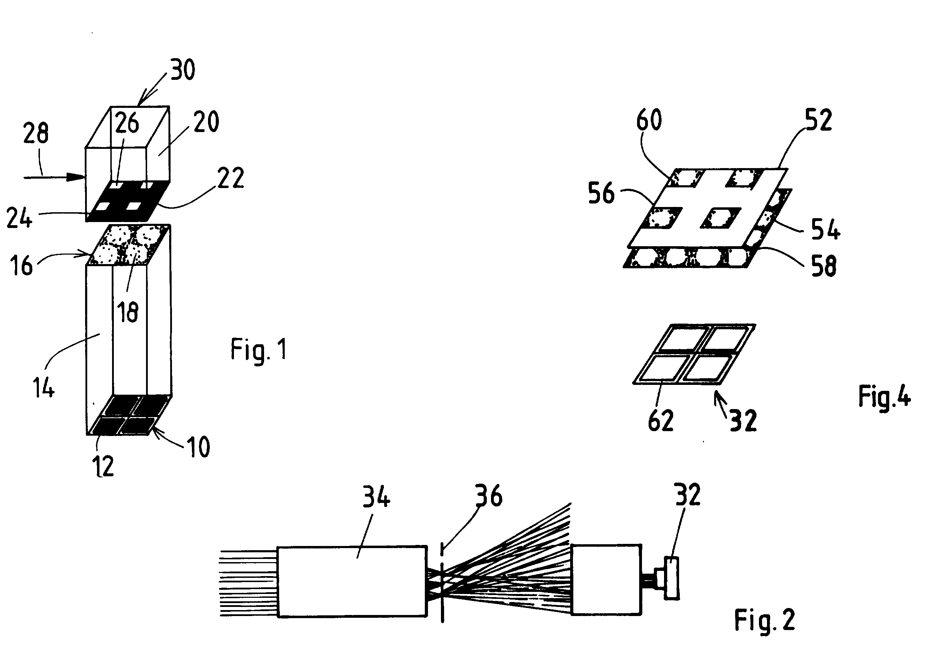

In Fig.1 ist mit 10 ein Ausschnitt aus einer zweidimensionalen Anordnung von Detektorelementen bezeichnet. Der dargestellte Ausschnitt enthält vier quadratische Detektorelemente 12. Die Kantenlänge eines Detektorelements 12 ist 40 µm. Die Detektorelemente 12 sind auf der Rückseite eines Substrats 14 aus CdZnTe aufgebracht. Auf der Vorderseite des Substrats ist ein Mikro-Linsenraster 16 mit geätzten Linsen 18 gebildet. Das Rastermaß des Mikro-Linsenrasters 16 entspricht dem des Rasters der Detektorelemente 12, beträgt also ebenfalls 40 µm. Jedem Detektorelement 12 ist somit eine Linse 18 des Mikro-Linsenrasters 16 zugeordnet. Die Linsen 18 sind gleichachsig zu den Detektorelementen 12 angeordnet.

Vor dem Substrat 14 mit den Detektorelementen 12 und dem Mikro-Linsenraster 16 sitzt ein Substrat 20 mit einem Mikro-Blendenraster 22. Das Mikro-Blendenraster 22 besteht aus quadratischen Blendenmustern 24 und hat ein Rastermaß von 40 µm, entsprechend dem Rastermaß der Detektoranordnung 10 und des Mikro-Linsenrasters 16.

Jedes der quadratischen Blendenmuster 24 hat vier Quadranten. Davon ist jeweils der erste Quadrant, links hinten in Fig. 1, lichtdurchlässig und bildet eine Blendenöffnung 26. Die drei anderen Quadranten sind opak oder lichtundurchlässig. Die Quadranten haben somit jeweils die Abmessungen 20 µm x 20 µm.

Das Substrat 20 mit dem Mikro-Blendenraster ist durch Piezosteller, die in Fig.1 durch Pfeile 28 und 30 angedeutet sind in 20 µm-Schritten in zwei zueinander senkrechten Richtungen in vier Positionen verstellbar: In der ersten Position fluchten die Blendenöffnungen 26 jeweils mit dem linken hinteren Quadranten der zugehörigen Detektorelemente 12. In der zweiten Position ist das Mikro-Blendenraster durch den Piezosteller 28 um einen 20 µm - Schritt nach rechts verschoben, so daß die Blendenöffnungen 26 jeweils mit dem rechten, hinteren Quadranten der zugehörigen Detektorelemente fluchten. In der dritten Position sind beide Piezosteller 28 und 30 aktiviert. Das Substrat 20 mit dem Mikro-Blendenraster 22 ist um einen 20 µm - Schritt nach vorn und um einen 20 µm - Schritt nach rechts in Fig.1 verschoben. In dieser Position fluchten die Blendenöffnungen 26 jeweils mit dem rechten vorderen Quadranten des zugehörigen Detektorelements 12. In der vierten Position schließlich ist der Piezostelle 28 in seiner Ausgangsstellung, aber der Piezosteller 30 hat das Substrat 20 mit dem Mikro-Blendenraster um einen 20 µm - Schritt nach vorn in Fig.1 verschoben. Die Blendenöffnungen 26 fluchten dann jeweils mit dem linken vorderen Quadranten des zugehörigen Detektorelements 12. Die Piezosteller werden in zyklischer Folge angesteuert.

Ein Bild einer Objektszene wird in der Ebene des Mikro-Blendenrasters 22, erzeugt. Auf jedem der quadrarischen Blendenmuster 24 werden vier benachbarte Bildelemente erzeugt. Diese vier Bildelemente sind jeweils einem Detektorelement 12 zugeordnet. Von diesen vier Bildelementen wird jeweils eines durch die Blendenöffnung 26 hindurch von dem Detektorelement 12 erfaßt. Durch die zyklische Bewegung des Mikro-Blendenrasters 22 in die vorstehend geschilderten vier Positionen erfaßt jedes Detektorelement 12 nacheinander die vier ihm zugeordneten Bildelemente. Die Linsen 18 des Mikro-Linsenrasters 16 konzentrieren die Photonen in der Mitte der jeweils zugehörigen Detektorelemente 12 und erhöhen so den Füllfaktor.

In Fig.2 ist eine bildauflösende Detektoranordnung dargestellt, die es gestattet, mit einer zweidimensionalen Anordnung 32 von Detektorelementen nacheinander verschiedene Blickfelder oder verschiedene Abschnitte eines Blickfeldes zu erfassen, wobei auch diese Abschnitte des Blickfeldes dann zu einem "elektronischen" Bild des Gesamtblickfeldes zusammengesetzt werden. Diese Detektoranordnung enthält ein erstes abbildendes optisches System 34. Das erste abbildende optische System erzeugt in einer Zwischenbild-Ebene 35 übereinanderliegende Bilder von verschiedenen Abschnitten eines Blickfeldes.

Zu diesem Zweck kann das erste abbildende optische System 34 ein Linsensystem 36 sein, dem in der Eintritts-Pupille eine Prismen-Struktur 38 in Form einer flachen Pyramide vorgeschaltet ist. Man kann dann die Pupille in Sektoren 40, 42, 44 und 46 unterteilt denken, wobei der Strahlengang jedes Sektors durch eine zugehörige Seitenfläche der Prismen-Struktur hindurchgeht. Dadurch werden verschiedene Abschnitte des Blickfeldes übereinander in die Zwischenbild-Ebene 36 abgebildet.

Ein zweites abbildendes optisches System 48 bildet die Zwischenbild-Ebene 36 auf die zweidimensionale Anordnung 32 von Detektorelementen ab.

In der Zwischenbild-Ebene 36 sitzt ein mikrooptisches Strahlenablenk-Element 50. Dieses mikrooptische Strahlenablenk-Element 50 enthält zwei gegeneinander verschiebbare mikrooptische Linsenraster 52 und 54 (Fig.4). Davon ist das objektseitige mikrooptische Linsenraster 52 von Sammellinsen 56 gebildet, und das bildseitige mikrooptische Linsenraster 54 ist von Zerstreuungslinsen 58 gebildet. Das Linsenraster 52 kann relativ zu dem Linsenraster 54 verschoben werden. Dadurch erfolgt eine Strahlenablenkung. Die Verschiebung erfolgt dann in der Weise, daß nacheinander Strahlen aus den verschiedenen Sektoren 40, 42, 44 und 46 der Pupille des ersten abbildenden optischen Systems 34 auf das zweite abbildende optische System 48 geleitet und zur Erzeugung eines Bildes auf der Anordnung 32 von Detektorelementen herangezogen werden. Dadurch können mit einer einzigen Anordnung 32 von Detektorelementen nacheinander die verschiedenen Abschnitte des Blickfeldes erfaßt werden. Diese Abschnitte werden dann im Speicher "elektronisch" zu einem Gesamtbild des Blickfeldes oder der Objektszene zusammengesetzt. Dadurch kann ein großes Blickfeld mit der Auflösung erfaßt werden, die von der Anordnung 32 von Detektorelementen geliefert wird. Diese Anordnung 32 würde normalerweise nur ein kleineres Gesichtsfeld erfassen.

Die Verschiebung des mikrooptischen Linsenrasters 52 relativ zu dem Linsenraster 54 zur Umschaltung zwischen den verschiedenen Abschnitten des Blickfelds sind klein gegenüber dem Rastennaß. Das Linsenraster 52 wird dabei in "erste Stellungen" bewegt, wobei es in jeder dieser Stellungen die Strahlen aus einem der Sektoren 40, 42, 44 und 46 auf das zweite optische System 48 lenkt. Das mikrooptische Linsenraster 52 ist nun so ausgebildet und ansteuerbar, daß es in jeder der "ersten" Stellungen eine Erhöhung der Auflösung der bildauflösenden Detektoranordnung bewirkt.

Zu diesem Zweck ist das mikrooptische Linsenraster 52, ähnlich wie in Fig.1, als Mikro-Blendenraster ausgebildet. Das Mikro-Blendenraster enthält ein Raster von quadratischen Blendenmustern 60. Jedes Blendenmuster enthält wie in Fig.1 vier Quadranten. Davon enthält ein Quadrant eine Sammellinse 56. Diese entspricht der Blendenöffnung von Fig.1. Die übrigen drei Quadranten jedes Blendenmusters 60 sind opak. Das Rastermaß des Mikro-Blendenrasters (Linsenraster 52) und des Linsenrasters 54 ist so gewählt, daß das Blendenmuster bzw. doppelte Linsenraster 54 durch das zweite abbildende optische System auf das Raster der zweidimensionalen Anordnung 32 von Detektorelementen abgebildet wird, d.h. vier Quadranten des Blendenmusters 60 einem Detektorelement 62 zugeordnet sind. Bei dem Ausführungsbeispiel beträgt die Seitenlänge der quadratischen Detektorelemente 62, wie in Fig.1, 40 µm. Die Seitenlänge der quadratischen Blendenmuster 60 bzw. eines Feldes von vier Zerstreuungslinsen 58 im Linsenraster 54 beträgt 100 µm. Das zweite optische System 42 verkleinert das Zwischenbild im Verhältnis 1 : 2,5.

Ausgehend von den "ersten" Stellungen wird nun zusätzlich das als Blendenraster ausgebildete mikrooptische Linsenraster wie in Fig.1 nacheinander um das Rastermaß, d.h. 50 µm, nach rechts und nach vorn in vier "zweite" Stellungen bewegt. Das geschieht in der gleichen Weise wie im Zusammenhang mit Fig.1 beschrieben ist. Dadurch werden von jedem Detektorelement 62 nacheinander vier kleinere, den Quadranten entsprechende, benachbarte Bildbereiche erfaßt. Auch diese so erfaßten Helligkeitswerte können im Speicher "elektronisch" ineinandergeschachtelt werden zur Erzeugung eines elektronischen Bildes höherer Auflösung.

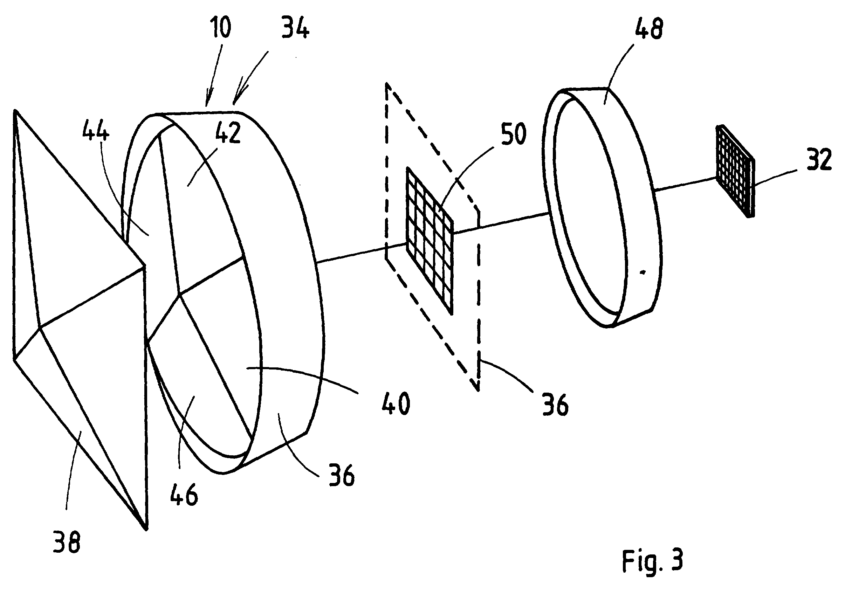

Bei der Ausführung nach Fig.2 bis 4 werden somit die beiden mikrooptischen Linsenraster 52 und 54, die eine Erweiterung des Blickfeldes gestatten, durch entsprechende Ausbildung und Ansteuerung des Linsenrasters gleichzeitig ausgenutzt, um die Auflösung zu erhöhen.

## Patentansprüche

1. Bildauflösende Detektoranordnung, auf welcher durch ein abbildendes optisches System (34) ein Bild einer Objektszene erzeugbar ist, mit einer zweidimensionalen Anordnung (10;32) von Detektorelementen (12;62) und Bildelement-Auswahlmitteln, durch welche auf jedes der Detektorelemente (12;62) nacheinander Strahlung von jeweils einem von mehreren benachbarten Bildelementen eines dem Detektorelement (12;62) zugeordneten Bildbereichs geleitet wird, **dadurch gekennzeichnet, daß** die Bildelement-Auswahlmittel von einem in einer Bildebene (36) angeordneten, in dieser Bildebene (36) schrittweise beweglichen Mikro-Blendenraster (22;52) gebildet sind, das in jeder Stellung nur Strahlung von einem Teilbereich jedes einem Detektorelement (12;62) zugeordneten Bildbereichs auf das Detektorelement (12;62) gelangen läßt.

2. Bildauflösende Detektoranordnung nach Anspruch 1, **dadurch gekennzeichnet, daß**
(a) die Abmessungen der rechtreckigen Rasterelemente (24) des Mikro-Blendenrasters (22) den Amessungen der Detektorelemente (12) der zweidimensionalen Anordnung (10) von Detektorelementen entspricht,
(b) von jeweils vier gleichen Quadranten der Rasterelemente (24) des Mikro-Blendenrasters (22) einer lichtdurchlässig und die drei anderen opak sind und
(c) das Mikro-Blendenraster (22) durch Stellmittel (28,30) in zwei Richtungen relativ zu der zweidimensionalen Anordnungen (10) von Detektorelementen (12) um jeweils das halbe Rastermaß des Detektorrasters verstellbar ist.

3. Bildauflösende Detektoranordnung nach Anspruch 2, **dadurch gekennzeichnet, daß** die Stellmittel von Piezostellern (28,30) gebildet sind.

4. Bildauflösende Detektoranordnung nach einem der Ansprüche 1 bis 3, **dadurch gekennzeichnet, daß** zur gleichmäßigeren Ausleuchtung der Detektorelemente (12) zwischen dem Mikro-Blendenraster (22) und der zweidimensionalen Anordnung (10) von Detektorelementen (12) ein Mikro-Linsenraster (16) mit gleichem Rastermaß angeordnet ist.

5. Bildauflösende Detektoranordnung nach Anspruch 4, **dadurch gekennzeichnet, daß** das Mikro-Linsenraster (16) auf der Vorderseite eines Substrats (14) angebracht ist, auf dessen Rückseite die Detektorelemente (12) gebildet sind.

6. Bildauflösende Detektoranordnung nach Anspruch 1, **dadurch gekennzeichnet, daß**
(a) zur Erfassung mehrerer Gesichtsfelder mittels der bildauflösenden Detektoranordnung ein erstes abbildendes optisches System (34) vorgesehen ist, in dessen Pupille eine Mehrzahl von Pupillen-Bereichen (40,42,44,46) gebildet sind, von denen jeder ein Gesichtsfeld auf einen gemeinsamen Bildebenen-Bereich abbildet,
(b) in dem gemeinsamen Bildebene-Bereich ein mikrooptisches Strahlenablenk-Element (50) in Form eines Paares gegeneinander verschiebbarer mikrooptischer Linsenraster (52,54) angeordnet ist,
(c) das mikrooptische Strahlenablenk-Element (50) durch ein zweites abbildendes optisches System (48) auf die zweidimensionale Anordnung (32) von Detektorelementen (62) abbildbar ist,
(d) die Rasterelemente der mikrooptischen Linsenraster (52,54) durch das zweite abbildende optische System (48) auf jeweils ein Detektorelement (62) der zweidimensionalen Anordnung (32) von Detektorelementen abbildbar sind,
(e) bei einem der Linsenraster (52) jedes Rasterelement (60) jeweils eine mikrooptische Linse (56) in einem Quadranten aufweist und in den drei übrigen Quadranten opak ist und
(f) die Linsenraster (52,54) derart verschiebbar sind, daß
- sie mit in aufeinanderfolgenden, ersten relativen Stellungen zeitlich nacheinander Strahlung aus den verschiedenen Pupillen-Bereichen (40,42,44,46) auf das zweite abbildende optische System (48) lenken und
- in jeder der ersten Stellungen das Linsenraster (52) mit den opaken Quadranten um jeweils das Rastermaß in zwei Richtungen in zweite Stellungen verstellbar ist.

7. Bildauflösende Detektoranordnung, dadurch gekennzeichnet, daß ein Linsenraster (52) von Sammellinsen (56) und das andere Linsenraster (54) von Zerstreuungslinsen (58) gebildet ist.
